# EUROPÄISCHE PATENTSCHRIFT

(11) **EP 0 835 375 B1**
(45) Veröffentlichungstag und Bekanntmachung des Hinweises auf die Patenterteilung: **08.12.1999**
(21) Anmeldenummer: 96916013.4
(22) Anmeldetag: 11.06.1996
(51) Int. Cl.: F02M 37/22

(54) **KRAFTSTOFFILTER MIT EINEM INTEGRIERTEN DRUCKREGELVENTIL**
FUEL FILTER WITH INTEGRATED PRESSURE REGULATING VALVE
FILTRE A CARBURANT A REGULATEUR INTEGRE DE PRESSION

(30) Priorität: 29.06.1995 DE 19523626
(43) Veröffentlichungstag der Anmeldung: 15.04.1998
(73) Patentinhaber: KNECHT FILTERWERKE GMBH, 70376 Stuttgart (DE); DaimlerChrysler AG, 70567 Stuttgart (DE)
(72) Erfinder: JAUSS, Stefan, D-73054 Eislingen (DE); VOGT, Fritz, D-70374 Stuttgart (DE); MAUZ, Lothar, D-73730 Esslingen (DE); TRIFFTERER, Adolf, D-73240 Wendlingen (DE); SCHIFFER, Walter, D-65835 Liederbach (DE); SCHREPFER, Jürgen, D-65510 Hünstetten (DE)
(74) Vertreter: Patentanwalts-Partnerschaft Rotermund + Pfusch
(86) Internationale Anmeldenummer: DE9601064
(87) Internationale Veröffentlichungsnummer: WO9701705

(56) Entgegenhaltungen:
- EP-A- 0 702 142
- DE-U- 9 414 297

## Beschreibung

Die Erfindung betrifft Kraftstoffilter mit jeweils einem integrierten Druckregelventil nach den Oberbegriffen der Patentansprüche 1, 6 und 7.

Im Kreislauf aus einem Kraftstofftank geförderter Kraftstoff bedeutet hier, daß der Kraftstoff mittels einer Pumpe aus einem Kraftstofftank zu den Kraftstoffeinspritzstellen gelangt, wobei jeweils mehr Kraftstoff gefördert als eingespritzt wird. Der zuviel geförderte Kraftstoff wird in den Tank zurückgefördert. In der Kreislaufleitung ist das gattungsgemäße Druckregelventil vorgesehen, durch das ein gleichbleibend hoher Druck an den Einspritzstellen gewährleistet werden soll.

Aus DE 44 30 852 A1 ist ein Kraftstoffilter bekannt mit einem Druckregelventil, das aus einem mit einem Deckel verschließbaren Filtertopf mit einem in diesem vorgesehenen von radial außen nach radial innen durchströmten Ringfilterelement besteht, bei dem Kraftstoff durch an entgegengesetzten Stirnseiten des Filters vorgesehene Hauptstrom-Stutzen zu- bzw. abströmt. Ferner ist dort ein für den im Kreislauf zurückzuführenden Kraftstoff zentral angeordneter Kreislauf-Rücklaufstutzen angebracht. Des weiteren ist das Druckregelventil in einen Stirnwandbereich des Filtergehäuses integriert und in der Achse des Filters angeordnet, wo es von dem gereinigten Kraftstoff beaufschlagt wird.

Aus DE 34 46 325 Al ist ein Kraftstoffzuführungssystem mit einem gegen Atmosphäre arbeitenden Druckregelventil bekannt, bei dem das Druckregelventil nicht in das Gehäuse des Kunststoffilters integriert ist. Jene Ausführung ist aufwendig in der Herstellung und besitzt eine Vielzahl untereinander mit teilweise recht langen Leitungen zu verbindender Bauteile.

Ein Kraftstoffilter mit den gattungsbildenden Merkmalen der Ansprüche 1 und 7 ist aus EP 0 702 142 A1 bekannt und ein solches mit den gattungsbildenden Merkmalen des Anspruchs 6 aus DE 94 14 297 U1..

Hiervon ausgehend beschäftigt sich die Erfindung mit dem Problem, gattungsgemäße Kraftstoffilter mit einem integrierten gegen Atmosphärendruck arbeitenden Druckregelventil mit einem konstruktiv einfachen und rationell herstellbaren Aufbau zu schaffen.

Vorteilhafte Lösungen dieses gemeinsamen Problems zeigen die Merkmale der Patentansprüche 1, 6 und 7 auf. Zweckmäßige Ausführungen der Lehre des Anspruchs 1 sind Gegenstand der Ansprüche 2 bis 5.

Nachfolgend erläuterte Ausführungsbeispiele der Erfindung sind in der Zeichnung dargestellt.

Es zeigen
- Fig. 1: einen Längsschnitt durch ein Kraftstoffilter mit integriertem Druckregelventil,
- Fig. 2: ein alternativ ausgeführtes Kraftstoffilter in der Darstellung nach Fig. 1.

Ein Kraftstoffilter ist als ein mit einem Deckel 1 verschlossener Filtertopf 2 ausgeführt. In dem Filtertopf 2 befindet sich ein achsgleich angeordnetes Ringfilterelement 3, das von außen nach innen von Kraftstoff durchströmt wird. Zur Ausbildung eines Roh- und Reinraumes innerhalb des Filters ist das Ringfilterelement 3 an seinen axialen Enden mit undurchlässigen ringförmigen Endscheiben 4 und 5 abgedeckt. Mit der in der Zeichnung unten liegenden Endscheibe 5 sitzt das Filterelement 3 radial dicht auf einem von dem Gehäuse in das Innere des Filtertopfes 2 hineinragenden Stutzen 6 auf. Radial außen verbleibt zwischen der Endscheibe 5 und dem Gehäuse des Filtertopfes 2 ein durchströmbarer Raum.

Die in der Zeichnung oben gelegene Endscheibe 4 dichtet radial außen gegenüber der Wand des Filtertopfes 2. Dadurch ist ein radial außen an das Ringfilterelement 3 angrenzender Raum innerhalb des Filtertopfes 2 als Rohraum 7 von einem zentral innerhalb des Ringfilterelementes 3 gelegenen Reinraum 8 getrennt. In den Rohraum 7 führt ein an der unteren Stirnseite des Filtertopfes mündender Zulaufstutzen 9, durch den Kraftstoff in das Filter einströmt.

Ein an der in der Zeichnung oben liegenden Stirnseite des Filters in dem Deckel 1 gelegener Ablaufstutzen 10 führt den gefilterten Kraftstoff zu den Einspritzstellen des Verbrennungsmotors.

In dem Filterdeckel 1 befindet sich zusätzlich ein Druckregelventil 11. Dieses arbeitet mit der Atmosphäre als Vergleichsdruck gegenüber dem Kraftstoffdruck im Inneren des Filtertopfes 2. Um den Vergleichsdruck erfassen zu können, besitzt das Druckregelventil 11 einen offenen zur Atmosphäre führenden Entlüftungsstuzten 12. Dieser Stutzen 12 kann mit einem unter Atmosphärendruck stehenden Tank des Verbrennungsmotors verbunden sein.

Das Druckregelventil 11 ist im einzelnen wie folgt aufgebaut.

In den Deckel 1 des Filtergehäuses ist achszentral ein glokkenförmiges zum Filterinneren hin offenes Gehäuse 13 für das Druckregelventil 11 eingeformt. An dem zum Inneren des Filters übergehenden Rand dieses Gehäuses 13 ist eine Membran 14 zusammen mit einem Ventilteller 15 dicht befestigt. Die dichte Befestigung wird über ein Anbördeln eines an dem Filterdeckel 1 vorgesehenen Bördelsteges 16 erreicht. Die Membran 14 sitzt zentral auf einem Stempel 17 auf, der mit einem Schaft in den Entlüftungsstutzen 12 eingreift und dort in Längsrichtung dieses Stutzens verschiebbar gelagert ist. Der Schaft des Stempels 17 besitzt radial innerhalb des Stutzens 12 ein für eine Entlüftung ausreichendes Spiel. An dem dem Schaft gegenüberliegenden Ende ist der Stempel 17 als Verschlußelement für eine Abflußöffnung 18 des Druckregelventiles 11 ausgebildet. Die Öffnung 18 wird von dem Ventilteller 15 gebildet, der in seinem Bereich zwischen der Abflußöffnung 18 und seiner radial außen liegenden Befestigung an dem Filterdeckel 1 Durchflußöffnungen 19 zur Beaufschlagung der Membran 14 mit dem Druck des in dem Reinraum des Filters anstehenden Kraftstoffes. Der Stempel 17 ist durch eine Druckfeder 20 schließkraftbelastet. An dem Ventilteller 15 ist die Abflußöffnung 18 umgebend ein Aufnahmestutzen 21 angebunden, der in das Zentrum des Ringfilterelements 3 hineinragt.

An die dem Druckregelventil 11 innerhalb des Filters entfernt liegende Endscheibe 5 des Ringfilterlementes 3 ist zentral innen mit Abstand zu dem Filtermaterial des Ringfilterelementes 3 ein Rohr 22 als Strömungskanal angeformt. Das Material der Endscheibe 5 mit dem angeformten Rohr 22 ist ein Kunststoff. Das Rohr 22 steht über den Aufnahmestutzen 21, in den es dicht einschiebbar ist, mit der Abflußöffnung 18 des Druckregelventiles 11 in Verbindung. Dadurch kann durch das Druckregelventil 11 im Kreislauf zurückzuführender Kraftstoff über das Rohr 22 durch den Stutzen 6 in den Kraftstofftank zurückfließen.

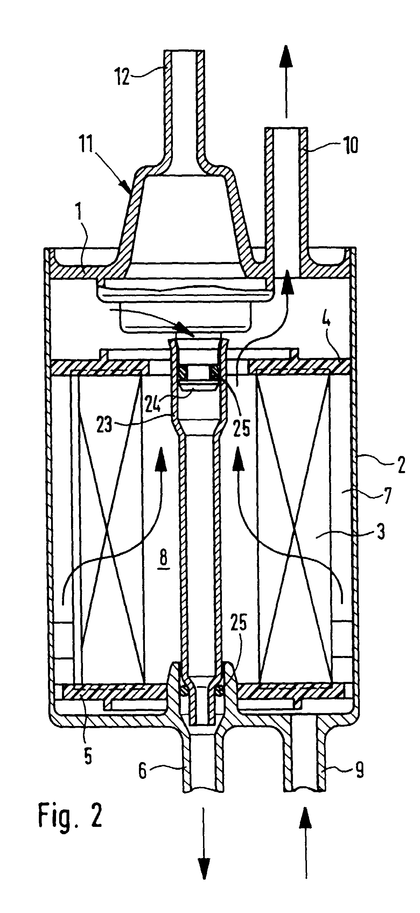

Bei der Filterausführung nach Fig. 2, bei der das Druckregelventil 11 lediglich angedeutet ist, ist anstelle des mit einer Endscheibe 5 des Filterelementes 3 einstückig verbundenen Rohrs 22 ein getrenntes Verbindungsrohr 23 eingesetzt. Dieses Verbindungsrohr 23 ist jeweils dicht in einerseits den Rücklaufstutzen 6 und andererseits auf einen Stutzen 24 des Druckregelventiles 11 ein- beziehungsweise aufsteckbar. Damit die betreffenden Steckverbindungen dicht sind, können Dichtringe 25 verwendet werden.

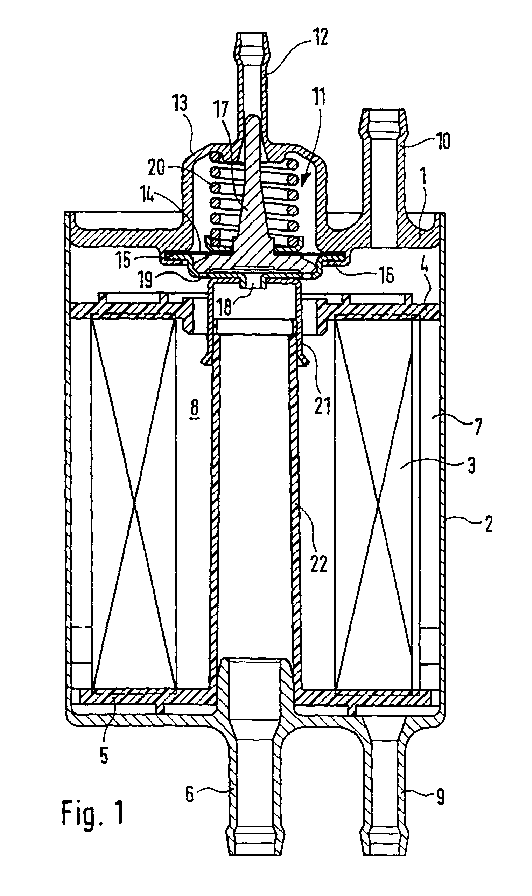

Bei einer Montage des erfindungsgemäßen Kraftstoffilters müssen die einzelnen Teile, wie beispielsweise das Ringfilterelement 3, der Filtertopf 2 sowie der Filterdeckel 1 lediglich ineinandergesteckt werden. Dabei ergibt sich dann auch die Steckverbindung zwischen dem Aufnahmestuzten 21 mit der Abflußöffnung 18 des Druckregelventiles 11 mit dem bei der Ausführung nach Fig. 1 als Rohr 22 ausgebildeten zu dem Rücklaufstutzen 6 führenden Strömungskanal. Ähnliches gilt für die Ausführung nach Fig. 2 mit einem getrennten Verbindungsrohr 23.

Die Steckverbindungen sind bis auf die Verbindung zwischen dem Filterdeckel 1 und dem Filtertopf 2 bereits ohne weitere Hilfsmaßnahmen dicht. Lediglich die zuletzt genannte Verbindung ist noch durch zusätzliche Hilfsmaßnahmen in an sich bekannter Weise kraftschlüssig und dicht zu verschließen.

Das in den Deckel 1 des Filters integrierte Druckregelventil 11 kann einfach in diesen eingebaut werden. Derart vorgefertigt kann der Filterdeckel 1 mit dem Filtertopf 2 verbunden werden.

## Patentansprüche

1. Kraftstoffilter mit einem Druckregelventil (11) für in einen Verbrennungsmotor unter konstantem Druck zur Verbrennung einzuspritzenden im Kreislauf aus einem Kraftstofftank geförderten Kraftstoff, das aus einem mit einem Deckel (1) verschließbaren Filtertopf (2) mit einem in diesem vorgesehenen von radial außen nach radial innen durchströmten Ringfilterelement (3) besteht, bei dem
- Kraftstoff durch an entgegengesetzten Stirnseiten des Filters vorgesehene Hauptstrom-Stutzen (9, 10) zu- bzw. abströmt,
- für den im Kreislauf zurückzuführenden Kraftstoff ein Kreislauf-Rücklaufstutzen (6) angebracht ist,
- das Druckregelventil (11) sich im Bereich der Achse des Filters in einem ersten Stirnwandbereich des Filtergehäuses zusammen mit dem Ablaufstutzen (10) befindet und von dem gereinigten Kraftstoff beaufschlagt ist,
- das Druckregelventil (11) gegen Atmosphäre als Vergleichsdruck arbeitet und eine von der Atmosphärenseite aus federbelastete Membran (14) besitzt, die in Verbindung mit einem Verschlußstempel (17) als Verschlußmittel für die Einlaßöffnung eines das Zentrum des Filters durchgreifenden Kreislauf-Rücklaufströmungskanals (22, 23) dient,
- der Kreislauf-Rücklaufströmungskanal (22, 23)den den Kraftstoff-Rücklauf freigebenden Bereich des Druckregelventiles (11) mit dem Rücklaufstutzen (6) verbindet, der radial dicht das Zentrum einer ihm zugeordneten Endscheibe (5) des Ringfilterelementes (3) durchgreift,
- das Druckregelventil (11) einen Ventilsitz (15) für eine Auflage des Verschlußstempels (17) besitzt, wobei der Ventilsitz (15) mit einer zentralen Öffnung (18) und Durchlauföffnungen (19) radial außerhalb dieser zentralen Öffnung (18) zur Kraftstoffbeaufschlagung der Membran (14) versehen ist,
- der Zulaufstutzen (9) und der Rücklaufstutzen (6) gemeinsam in dem zweiten Stirnwandbereich des Filters mit einer zentralen Anordnung des Rücklauf-Stutzens vorgesehen sind,
- der den Kraftstoff-Rücklauf freigebende Bereich des Druckregelventiles (11) mit dem Rücklauf-Stutzen (6) über eine Steckverbindung verbunden ist,
**dadurch gekennzeichnet**,
daß die von der Atmosphärenseite aus federbelastete Membran (14) zusammen mit dem Ventiisitz (15) an dem Rand eines offen in den Filtertopf (2) mündenden, in den Deckel (1) des Filtergehäuses eingeformten glockenförmigen Druckregler-Gehäuses (13) dicht befestigt ist.

2. Kraftstoffilter nach Anspruch 1,
**dadurch gekennzeichnet**,
daß die Membran (14) zusammen mit dem Ventilsitz (15) an dem in das Innere des Filtertopfes (2) mündenden Rand des Druckregelventil-Gehäuses (13) eingebördelt ist.

3. Kraftstoffilter nach Anspruch 1 oder 2,
**dadurch gekennzeichnet**,
daß ein koaxial zur Ringfilterachse ausgerichteter, offen in das Ringfilterinnere einmündender Stutzen (21) des Druckregelventiles (11) mit dem Ventilsitz (15) dicht verbunden ist.

4. Kraftstoffilter nach einem der Ansprüche 1 bis 3,
**dadurch gekennzeichnet**,
daß der Rücklauf-Strömungskanal ein von einer dicht an dem Rücklauf-Stutzen (6) anliegenden Endscheibe des Filterelementes (3) einstückig ausgehendes Rohr (22) ist.

5. Kraftstoffilter nach einem der Ansprüche 1 bis 3,
**dadurch gekennzeichnet**,
daß der den Kraftstoff-Rücklauf freigebende Bereich des Druckregelventiles (11) mit dem Rücklaufstutzen (6) über einen Rücklauf-Strömungskanal verbunden ist, der als eine in die Anschlußstellen des Druckregelventiles (11) einerseits und des Rücklaufstutzens (6) andererseits jeweils dicht einsteckbare Rohrleitung (23) ausgebildet ist.

6. Kraftstoffilter mit einem Druckregelventil (11) für in einem Verbrennungsmotor unter konstantem Druck zur Verbrennung einzuspritzenden, im Kreislauf aus einem Kraftstofftank geförderten Kraftstoff, das aus einem mit einem Deckel (1) verschließbaren Filtertopf (2) mit einem in diesem vorgesehenen von radial außen nach radial innen durchströmten Filterelement (3) besteht, bei dem Kraftstoff durch an entgegengesetzten Stirnseiten des Filters vorgesehene Hauptstrom-Stutzen (9, 10) zu- bzw. abströmt, bei dem ferner für den im Kreislauf zurückzuführenden Kraftstoff ein Kreislauf-Rücklauf-Stutzen (6) angebracht ist und bei dem des weiteren das Druckregelventil (11) in einem Stirnwandbereich des Filtergehäuses in der Achse des Filters angeordnet und von dem gereinigten Kraftstoff beaufschlagt ist und bei dem ferner der Rücklauf-Stutzen (6) radial dicht das Zentrum einer ihm zugeordneten Endscheibe (5) des Filterelementes durchgreift,
**gekennzeichnet durch die Merkmale**
- das Druckregelventil (11) arbeitet gegen Atmosphäre als Vergleichsdruck,
- das Druckregelventil (11) ist in einen ersten Stirnwandbereich des Filters zusammen mit dem Ablauf-Stutzen (10) integriert,
- der Zulauf-Stutzen (9) und der Rücklauf-Stutzen (6) sind gemeinsam in dem zweiten Stirnwandbereich des Filters vorgesehen mit einer zentralen Anordnung des Rücklauf-Stutzens (6),
- der den Kraftstoff-Rücklauf freigebende Bereich des Druckregelventiles (11) ist über einen das Zentrum des Filters durchgreifenden Rücklauf-Strömungskanal (23) mit dem Rücklauf-Stutzen (6) verbunden,
- der Rücklauf-Strömungskanal (23) ist eine Rohrleitung, die über eine Steckverbindung mit dem Rücklauf-Stutzen (6) und dem Druckregelventil (11) verbunden ist.

7. Kraftstoffilter mit einem Druckregelventil (11) für in einem Verbrennungsmotor unter konstantem Druck zur Verbrennung einzuspritzenden, im Kreislauf aus einem Kraftstofftank geförderten Kraftstoff, das aus einem mit einem Deckel (1) verschließbaren Filtertopf (2) mit einem in diesem vorgesehenen radial außen nach radial innen durchströmten Ringfilterelement (3) besteht, bei dem Kraftstoff durch an entgegengesetzten Stirnseiten des Filters vorgesehene Hauptstrom-Stutzen (9, 10) zu- bzw. abströmen, bei dem ferner für den im Kreislauf zurückzuführenden Kraftstoff ein Kreislauf-Rücklauf-Stutzen (6) angebracht ist und bei dem des weiteren das Druckregelventil (11) in einem Stirnwandbereich des Filtergehäuses in der Achse des Filters angeordnet ist und bei dem ferner
- das Druckregelventil (11) gegen Atmosphäre als Vergleichsdruck arbeitet,
- das Druckregelventil (11) in einen ersten Stirnwandbereich des Filters zusammen mit dem Ablaufstutzen (10) integriert und von dem gereinigten Kraftstoff beaufschlagt ist,
- der Zulauf-Stutzen (9) und der Rücklauf-Stutzen (6) gemeinsam in dem zweiten Stirnwandbereich des Filters vorgesehen sind mit einer zentralen Anordnung des Rücklauf-Stutzens (6),
- der den Kraftstoff-Rücklauf freigebende Bereich des Druckregelventiles (11) über einen das Zentrum des Filters durchgreifenden Rücklauf-Strömungskanal mit dem Rücklauf-Stutzen (6) verbunden ist,
**gekennzeichnet durch die Merkmale**
- der Rücklauf-Stutzen (6) durchgreift radial dicht das Zentrum einer ihm zugeordneten Endscheibe (5) des Filterelementes,
- der Rücklauf-Strömungskanal ist ein von der dicht an den Rücklauf-Stutzen (6) anliegenden Endscheibe des Filterelementes einstückig ausgehendes Rohr (22).

## Claims

1. Fuel filter with a pressure regulating valve (11) for fuel which is circulated from a fuel tank and is to be injected into an internal combustion engine at constant pressure for combustion, which fuel filter comprises a filter pot (2), which can be closed by a cover (1) and in which there is provided an annular filter element (3) through which flow takes place from the outside, radially, to the inside, radially, in which
- fuel flows in and out through main-flow connections (9, 10) which are provided on opposite end sides of the filter,
- a recirculation connection (6) is provided for the fuel to be recirculated,
- the pressure regulating valve (11) is situated, in the region of the axis of the filter, in a first end-wall region of the filter housing, together with the discharge connection (10), and is acted on by the cleaned fuel,
- the pressure regulating valve (11) operates against atmospheric pressure as the reference pressure and has a diaphragm (14) which is spring-loaded from the atmosphere side and, in conjunction with a closure ram (17), serves as a closure means for the inlet port of a recirculation flow duct (22, 23) which passes through the centre of the filter,
- the recirculation flow duct (22, 23) connects that region of the pressure regulating valve (11) which allows the return of fuel to the return connection (6), which passes in a radially sealed manner through the centre of an associated end disc (5) of the annular filter element (3),
- the pressure regulating valve (11) has a valve seat (15) to support the closure ram (17), the valve seat (15) being provided with a central port (18) and through-flow ports (19) radially outside this central port (18), in order for fuel to act on the diaphragm (14),
- the feed connection (9) and the return connection (6) are provided together in the second end-wall region of the filter, with the return connection arranged centrally,
- that region of the pressure regulating valve (11) which allows the return of fuel is connected to the return connection (6) via a plug-in connection,
characterized in that the diaphragm (14), which is spring-loaded from the atmosphere side, together with the valve seat (15), is fastened in a sealed manner to the edge of a bell-shaped pressure regulator housing (13), which opens into the filter pot (2) and is formed in the cover (1) of the filter housing.

2. Fuel filter according to Claim 1, characterized in that the diaphragm (14), together with the valve seat (15), is flanged in at that edge of the pressure regulating valve housing (13) which opens into the interior of the filter pot (2).

3. Fuel filter according to Claim 1 or 2, characterized in that a connection (21), which is aligned coaxially with respect to the axis of the annular filter and opens into the interior of the annular filter, of the pressure regulating valve (11) is connected in a sealed manner to the valve seat (15).

4. Fuel filter according to one of Claims 1 to 3, characterized in that the return flow duct is a pipe (22) which starts from an end disc, which bears in a sealed manner against the return connection (6), of the filter element (3) and is integral with this end disc.

5. Fuel filter according to one of Claims 1 to 3, characterized in that that region of the pressure regulating valve (11) which allows the return of fuel is connected to the return connection (6) via a return flow duct, which is designed as a pipeline (23), which can be plugged into the connecting locations of the pressure regulating valve (11), on the one hand, and of the return connection (6), on the other hand, in each case in a sealed manner.

6. Fuel filter with a pressure regulating valve (11) for fuel which is circulated from a fuel tank and is to be injected into an internal combustion engine at constant pressure for combustion, which fuel filter comprises a filter pot (2), which can be closed by a cover (1) and in which there is provided a filter element (3) through which flow takes place from the outside, radially, to the inside, radially, in which filter fuel flows in and out through main-flow connections (9, 10) which are provided on opposite end sides of the filter, in which filter furthermore a recirculation connection (6) is provided for the fuel to be recirculated, and in which filter, in addition, the pressure regulating valve (11) is arranged in an end-wall region of the filter housing in the axis of the filter and is acted on by the cleaned fuel, and in which filter, furthermore, the return connection (6) passes through the centre of an associated end disc (5) of the filter element in a radially sealed manner,
characterized by the following features
- the pressure regulating valve (11) operates against atmospheric pressure as reference pressure,
- the pressure regulating valve (11) is integrated, together with the discharge connection (10), in a first end-wall region of the filter,
- the feed connection (9) and the return connection (6) are provided together in the second end-wall region of the filter, with the return connection (6) arranged centrally,
- that region of the pressure regulating valve (11) which permits the return of fuel is connected to the return connection (6) via a return flow duct (23) which passes through the centre of the filter,
- the return flow duct (23) is a pipeline, which is connected, by means of a plug connection, to the return connection (6) and the pressure regulating valve (11).

7. Fuel filter with a pressure regulating valve (11) for fuel which is circulated from a fuel tank and is to be injected into an internal combustion engine at constant pressure for combustion, which fuel filter comprises a filter pot (2), which can be closed by a cover (1) and in which there is provided an annular filter element (3) through which flow takes place from the outside, radially, to the inside, radially, in which filter fuel flows in and out through main-flow connections (9, 10) which are provided on opposite end sides of the filter, in which filter furthermore a recirculation connection (6) is provided for the fuel to be recirculated, and in which filter, in addition, the pressure regulating valve (11) is arranged in an end-wall region of the filter housing in the axis of the filter, and in which, furthermore,
- the pressure regulating valve (11) operates against atmospheric pressure as reference pressure,
- the pressure regulating valve (11) is integrated, together with the discharge connection (10), in a first end-wall region of the filter and is acted on by the cleaned fuel,
- the feed connection (9) and the return connection (6) are provided together in the second end-wall region of the filter, with the return connection (6) arranged centrally,
- that region of the pressure regulating valve (11) which permits the return of fuel is connected to the return connection (6) via a return flow duct which passes through the centre of the filter,
characterized by the following features
- the return connection (6) passes through the centre of an associated end disc (5) of the filter element in a radially sealed manner,
- the return flow duct is a pipe (22) which starts from that end disc of the filter element which bears in a sealed manner against the return connection (6), and is integral with this end disc.

## Revendications

1. Filtre à carburant avec une soupape de régulation de pression (11) pour du carburant extrait en boucle d'un réservoir à carburant à injecter pour la combustion sous pression constante dans un moteur à combustion interne, lequel filtre à carburant se compose d'un pot de filtre (2) pouvant être fermé par un couvercle (1) avec un élément filtrant annulaire (3) prévu dans ce pot de filtre et traversé par le flux de l'extérieur radialement vers l'intérieur radialement, dans lequel
- du carburant entre et sort par des tubulures de circuit principal (9, 10) prévues sur les côtés frontaux opposés du filtre,
- une tubulure de retour dans le circuit (6) est installée pour le carburant à recycler,
- la soupape de régulation de pression (11) se trouve avec la tubulure d'écoulement (10) dans la zone de l'axe du filtre dans une première région de paroi frontale de l'enveloppe de filtre et est sollicitée par le carburant purifié,
- la soupape de régulation de pression (11) fonctionne par rapport à l'atmosphère comme pression de référence et possède une membrane (14) commandée par ressort à partir du côté atmosphère, qui sert, en relation avec un piston de fermeture (17), de moyen de fermeture pour l'ouverture d'admission d'un canal d'écoulement de retour dans le circuit (22, 23) traversant le centre du filtre,
- le canal d'écoulement de retour dans le circuit (22, 23) relie la région de la soupape de régulation de pression (11) libérant le retour de carburant à la tubulure de retour (6), qui traverse de manière étanche radialement le centre d'une plaque d'extrémité (5) de l'élément filtrant annulaire (3), qui lui est affectée,
- la soupape de régulation de pression (11) possède un siège de soupape (15) comme appui pour le piston de fermeture (17), le siège de soupape (15) étant pourvu d'une ouverture centrale (18) et d'ouvertures de passage (19) radialement à l'extérieur de cette ouverture centrale (18) pour que le carburant aille frapper la membrane (14),
- la tubulure d'arrivée (9) et la tubulure de retour (6) sont prévues ensemble dans la seconde région de paroi frontale du filtre avec un agencement central de la tubulure de retour,
- la région de la soupape de régulation de pression (11) libérant le retour de carburant est reliée à la tubulure de retour (6) par l'intermédiaire d'une liaison par enfichage,
**caractérisé en ce que** la membrane (14) commandée par ressort à partir du côté atmosphère est fixée de manière étanche avec le siège de soupape (15) au bord d'une enveloppe de régulateur de pression (13) en forme de cloche, moulée dans le couvercle (1) de l'enveloppe de filtre et débouchant ouverte dans le pot de filtre (2).

2. Filtre à carburant selon la revendication 1, **caractérisé en ce que** la membrane (14) est sertie avec le siège de soupape (15) au bord de l'enveloppe de soupape de régulation de pression (13) débouchant à l'intérieur du pot de filtre (2).

3. Filtre à carburant selon la revendication 1 ou 2, **caractérisé en ce qu'**une tubulure (21) de la soupape de régulation de pression (11) alignée de manière coaxiale à l'axe du filtre annulaire et débouchant ouverte à l'intérieur du filtre annulaire est reliée de manière étanche au siège de soupape (15).

4. Filtre à carburant selon l'une des revendications 1 à 3, **caractérisé en ce que** le canal d'écoulement de retour est un tube (22) partant d'un seul tenant d'une plaque d'extrémité de l'élément filtrant (3) accolée de manière étanche à la tubulure de retour (6).

5. Filtre à carburant selon l'une des revendications 1 à 3, **caractérisé en ce que** la région de la soupape de régulation de pression (11) libérant le retour de carburant est reliée à la tubulure de retour (6) par l'intermédiaire d'un canal d'écoulement de retour, qui est réalisé sous la forme d'une conduite tubulaire (23) pouvant être enfichée de manière étanche dans les points de raccordement de la soupape de régulation de pression (11) d'une part et de la tubulure de retour (6) d'autre part.

6. Filtre à carburant avec une soupape de régulation de pression (11) pour du carburant extrait en boucle d'un réservoir à carburant à injecter pour la combustion sous pression constante dans un moteur à combustion interne, lequel filtre à carburant se compose d'un pot de filtre (2) pouvant être fermé par un couvercle (1) avec un élément filtrant (3) prévu dans ce pot de filtre et traversé par le flux de l'extérieur radialement vers l'intérieur radialement, dans lequel du carburant entre et sort par des tubulures de circuit principal (9, 10) prévues sur les côtés frontaux opposés du filtre, dans lequel il est en plus monté une tubulure de retour dans le circuit (6) pour le carburant à recycler et dans lequel la soupape de régulation de pression (11) est par ailleurs disposée dans l'axe du filtre dans une région de paroi frontale de l'enveloppe de filtre et sollicitée par le carburant purifié et dans lequel la tubulure de retour (6) traverse en plus de manière étanche radialement le centre d'une plaque d'extrémité (5) de l'élément filtrant, qui lui est affectée,
**caractérisé par les caractéristiques**
- la soupape de régulation de pression (11) fonctionne par rapport à l'atmosphère comme pression de référence,
- la soupape de régulation de pression (11) est intégrée à une première région de paroi frontale du filtre avec la tubulure d'écoulement (10),
- la tubulure d'arrivée (9) et la tubulure de retour (6) sont prévues ensemble dans la seconde région de paroi frontale du filtre avec un agencement central de la tubulure de retour (6),
- la région de la soupape de régulation de pression (11) libérant le retour de carburant est reliée à la tubulure de retour (6) par l'intermédiaire d'un canal d'écoulement de retour (23) traversant le centre du filtre,
- le canal d'écoulement de retour (23) est une conduite tubulaire, qui est reliée à la tubulure de retour (6) et à la soupape de régulation de pression (11) par l'intermédiaire d'une liaison par enfichage.

7. Filtre à carburant avec une soupape de régulation de pression (11) pour du carburant extrait en boucle d'un réservoir à carburant à injecter pour la combustion sous pression constante dans un moteur à combustion interne, lequel filtre à carburant se compose d'un pot de filtre (2) pouvant être fermé par un couvercle (1) avec un élément filtrant (3) prévu dans ce pot de filtre et traversé par le flux de l'extérieur radialement vers l'intérieur radialement, dans lequel du carburant entre et sort par des tubulures de circuit principal (9, 10) prévues sur les côtés frontaux opposés du filtre, dans lequel il est en plus monté une tubulure de retour dans le circuit (6) pour le carburant à recycler et dans lequel la soupape de régulation de pression (11) est par ailleurs disposée dans l'axe du filtre dans une zone de paroi frontale de l'enveloppe de filtre et dans lequel en outre
- la soupape de régulation de pression (11) fonctionne par rapport à l'atmosphère comme pression de référence,
- la soupape de régulation de pression (11) est intégrée à une première région de paroi frontale du filtre avec la tubulure d'écoulement (10) et est sollicitée par le carburant purifié,
- la tubulure d'arrivée (9) et la tubulure de retour (6) sont prévues ensemble dans la seconde région de paroi frontale du filtre avec un agencement central de la tubulure de retour (6),
- la région de la soupape de régulation de pression (11) libérant le retour de carburant est reliée à la tubulure de retour (6) par l'intermédiaire d'un canal d'écoulement de retour traversant le centre du filtre,
**caractérisé par les caractéristiques**
- la tubulure de retour (6) traverse de manière étanche radialement le centre d'une plaque d'extrémité (5) de l'élément filtrant, qui lui est affectée,
- le canal d'écoulement de retour est un tube (22) partant d'un seul tenant de la plaque d'extrémité de l'élément filtrant accolée de manière étanche à la tubulure de retour (6).
